# EUROPEAN PATENT SPECIFICATION

(11) **EP 1 083 799 B1**
(45) Date of publication and mention of the grant of the patent: **29.09.2010**
(21) Application number: 98926372.8
(22) Date of filing: 05.06.1998
(51) Int. Cl.: A23G 4/06, A23G 4/20, A23G 4/10

(54) **METHOD OF CONTROLLING RELEASE OF N-SUBSTITUTED DERIVATIVES OF ASPARTAME IN CHEWING GUM AND GUM PRODUCED THEREBY**
VERFAHREN ZUR KONTROLLIERTEN ABGABE N-SUBSTITUIERTER DERIVATE DES ASPARTAMS IN KAUGUMMI SOWIE DAMIT HERGESTELLTER KAUGUMMI
PROCEDE POUR MODULER LA LIBERATION DE DERIVES N-SUBSTITUES D'ASPARTAME DANS UNE GOMME A MACHER ET GOMME AINSI PRODUITE

(43) Date of publication of application: 21.03.2001
(73) Proprietor: WM. WRIGLEY JR. COMPANY, Chicago, Illinois 60611 (US)
(72) Inventor: YATKA, Robert, J., Orland Park, IL 60462 (US); TOWNSEND, Donald J., LaGrange, IL 60525 (US); JOHNSON, Sonya, S., LaGrange Highlands, IL 60525 (US); GREENBERG, Michael, J., Northbrook, IL 60062 (US); SITLER, Daniel, J., Woodridge, IL 60517 (US)
(74) Representative: Hayes, Adrian Chetwynd
(86) International application number: PCT/US1998/011741
(87) International publication number: WO 1999/062354

(56) References cited:
- EP-A- 0 272 220
- EP-A- 0 974 272
- FR-A- 2 719 592
- US-A- 3 492 131
- US-A- 4 139 639
- US-A- 4 284 721
- US-A- 4 374 858
- US-A- 4 384 004
- US-A- 4 634 593
- US-A- 4 645 678
- US-A- 4 673 582
- US-A- 4 873 359
- US-A- 4 978 537
- US-A- 4 997 659
- US-A- 5 112 625
- US-A- 5 112 625
- US-A- 5 310 908
- US-A- 5 480 668
- US-A- 5 510 508
- US-A- 5 637 334
- US-A- 5 637 334
- US-A- 5 728 862

## Description

### BACKGROUND OF THE INVENTION

The present invention relates to methods for producing chewing gum. More particularly the invention relates to producing chewing gum containing high-potency sweeteners which have been treated to control their release and enhance shelf-life stability.

In recent years, efforts have been devoted to controlling release characteristics of various ingredients in chewing gum. Most notably, attempts have been made to delay the release of sweeteners and flavors in various chewing gum formulations to thereby lengthen the satisfactory chewing time of the gum. Delaying the release of sweeteners and flavors can also avoid an undesirable overpowering burst of sweetness or flavor during the initial chewing period. On the other hand, some ingredients have been treated so as to increase their rate of release in chewing gum.

In addition, other efforts have been directed at perfecting the use of high-potency sweeteners within the chewing gum formulation, to thereby increase the shelf-life stability of the ingredients, i.e. the protection against degradation of the high-potency sweetener over time.

A recently identified class of high potency sweeteners are N-substituted derivatives of aspartame. Some of these sweeteners may give a long lasting sweetness release when used in chewing gum, while others may give a fast release that may not be compatible with the release of flavor. By modifying N-substituted derivatives of aspartame by various methods, a controlled release from chewing gum can be more effective to balance sweetness with flavor and give a highly consumer acceptable product.

The class of N-substituted derivatives of aspartame useful in the present invention are described in U.S. Patent No. 5,480,668. One particularly preferred N-substituted derivative of aspartame is commonly known as neotame. The chemical name of this sweetener is N-[N-(3,3-dimethylbutyl)-L-α-aspartyl]-L-phenylalanine 1-methyl ester. Other preferred N-substituted derivatives of aspartame sweeteners include two other similar chemicals, namely N-[N-[3-(4-hydroxy-3-menthoxyphenyl)propyl]-L-α-aspartyl]-L-phenylalanine 1-methyl ester and N-[N-(3-phenylpropyl)-L-α-aspartyl]-L-phenylalanine 1-methyl ester. A method for preparing neotame is disclosed in U.S. Patent Nos. 5,510,508 and 5,728,862.

Other patents disclose how a sweetener like aspartame can be physically modified to control its release rate in chewing gum.

For example, U.S. Patent No. 4,597,970 to Sharma et al*.* teaches a process for producing an agglomerated sweetener wherein the sweetener is dispersed in a hydrophobic matrix consisting essentially of lecithin, a glyceride, and a fatty acid or wax having a melting point between 25°C and 100°C. The method disclosed uses a spray-congealing step to form the sweetener-containing matrix into droplets, followed by a fuid-bed second coating on the agglomerated particles.

U.S. Patent Nos. 4,515,769 and 4,386,106, both to Merrit et al*.*, teach a two step process for preparing a delayed release flavorant for chewing gum. In this process, the flavorant is prepared in an emulsion with a hydrophilic matrix. The emulsion is dried and ground, and the resulting particles are then coated with a water-impermeable substance.

U.S. Patent No. 4,230,687 to Sair et al. teaches a process for encasing an active ingredient to achieve gradual release of the ingredient in a product such as chewing gum. The method described involves adding the ingredient to an encapsulating material in the form of a viscous paste. High-shear mixing is used to achieve a homogeneous dispersion of the ingredient within the matrix, which is subsequently dried and ground.

U.S. Patent No. 4,139,639 to Bahoshy et al*.* teaches a process of "fixing" aspartame by co-drying (by spray drying or fluid-bed coating) a solution containing aspartame and an encapsulating agent, such as gum arabic, to thereby surround and protect the aspartame in the gum during storage.

U.S. Patent No, 4,384,004 to Cea et al. teaches a method of encapsulating aspartame with various solutions of encapsulating agents using various encapsulation techniques, such as spray drying, in order to increase the shelf-stability of the aspartame.

U.S. Patent No. 4,634,593 to Stroz et al. teaches a method for producing controlled release sweeteners for confections, such as chewing gum. The method taught therein involves the use of an insoluble fat material which is mix mulled with the sweetener.

### SUMMARY OF INVENTION

The present invention includes a method of producing a chewing gum containing a physically-modified N-substituted derivative of aspartame in order to control the release rate of the N-substituted derivative of aspartame comprising the steps of:
a) mixing a quantity of the N-substituted derivative of aspartame with an agglomerating agent and a solvent to partially coat the N-substituted derivative of aspartame;
b) removing the solvent from the mixture of N-substituted derivative of aspartame and agglomerating agent to form a dried material; and
c) adding a quantity of the dried material to a chewing gum formulation to provide an N-substituted derivative of aspartame level in gum of from 0.0001% to 0.1%.

The sweetener may also be combined with other sweeteners including, but not limited to, sucrose, dextrose, fructose, maltose, maltodextrin, xylose, palatinose, or others that are considered bulk sweeteners, as well as polyols including but not limited to sorbitol, mannitol, xylitol, maltitol, lactitol, hydrogenated isomaltulose, and hydrogenated starch hydrolysates. The high-potency N-substituted derivative of aspartame sweetener may also be combined with other high-potency sweeteners including, but not limited to, thaumatin, aspartame, acesulfame K, sodium saccharin, sucralose, alitame, cyclamate, stevioside, glycyrrhizin and dihydrochalcones.

This sweetener, when modified according to the present invention, gives a chewing gum having a controlled-release sweetener. In some instances, a lower quantity of sweetener can be used to give initial impact or in other instances, a higher quantity of sweetener can be used without resulting in a high initial sweetness impact, but instead having a long delayed sweetness release that is compatible with the delayed flavor release in chewing gum, giving a highly consumer-acceptable chewing gum product.

### DETAILED DESCRIPTION OF THE PREFERRED EMBODIMENTS

Neotame is a high-potency sweetener which is about 8,000 times sweeter than sugar and about 40 times sweeter than aspartame. It is one of several N-substituted derivatives of aspartame disclosed in U. S. Patent No. 5,480,668 that are suitable as sweetening agents in the present invention.

At concentrations usually used, neotame has a lingering sweet taste and may be especially useful in chewing gum. Neotame was developed by the Nutrasweet Co., a division of Monsanto Company, which has filed a U.S. F.D.A. food addition petition. Because it is the most common of the N-substituted derivatives of aspartame, neotame's specific use in the present invention will be discussed. However, the other N-substituted derivatives of aspartame disclosed in U.S. Patent No. 5,480,668 may be treated and used in chewing gum at appropriate levels in the same way neotame is treated and used. Therefore, reference hereafter specifically to neotame should also be considered as suggestions to use the other N-substituted derivatives of aspartame as well.

The use of neotame in chewing gum has previously been suggested, but because of its possible low water solubility, it may have a slow release and could require modification to control its release from chewing gum. When neotame is added to chewing gum at a level of 0.0001 % to 0.1 %, the sweetener may give chewing gum an intense sweetness that lingers. It would be considered a significant improvement to a chewing gum to have the neotame sweetener release its sweetness more quickly along with some of the flavor in the gum, thus balancing the overall taste perception.

The preferred usage level of neotame in chewing gum is 0.001 % to 0,01 % or 10 to 100 ppm in chewing gum. Higher levels of neotame up to 0.1 % may also be useful as neotame may not only increase sweetness initially, but may also give the impression of a much longer lasting sweetness. Since flavor is released very slowly in chewing gum, extended sweetness with higher than normal levels of neotame could give a quality product.

Because of the high sweetness potency of neotame, the usage level in chewing gum will be very low as noted previously, 10 to 100 ppm. This low level may be difficult to mix into a chewing gum matrix if neotame is added as a powder. To successfully blend powdered neotame into gum, preblending neotame with a portion or all of the powdered bulking agent may be needed. For sugar gum, neotame may be preblended with any of the sugars used including sucrose, dextrose, maltose, fructose, galactose, and the like. For sugarless gum, neotame may be preblended with sorbitol, maltitol, xylitol, mannitol, lactitol, isomalt, erythritol or other easily mixable powder ingredients. The preblended neotame and powdered bulking agent may then be treated to modify the release rate of neotame.

Neotame can be added as a powder, as an aqueous dispersion, or mixed in glycerine, propylene glycol, corn syrup, hydrogenated starch hydrolysate, or any other compatible aqueous solutions.

For aqueous dispersions, an emulsifier can also be mixed in the solution with the neotame sweetener and the mixture added to a chewing gum. A flavor can also be added to the sweetener/emulsifier mixture. The emulsion formed can be added to chewing gum. Powdered neotame may also be mixed into a molten chewing gum base during base manufacture or prior to manufacture of the gum. Neotame may also be mixed with base ingredients during base manufacture.

Usage levels of neotame in water or aqueous solvent is limited to its solubility in the aqueous solvent. For neotame, solubility in water at 20°C may be less than 1%, but increases with temperature. In most other aqueous solvents, like glycerine or propylene glycol, the solubility of neotame is less than in plain water. Whether as a powder or dissolved in liquid, the amount of neotame added to chewing gum of the present invention is 0001-0.1%. Preferably the range of neotame in gum is 0.001% to 0.01%.

As stated previously, neotame probably releases slowly from chewing gum during the early stages of mastication of the gum because of its low solubility in water. Physical modifications of the sweetener by encapsulation with another substrate will increase or delay its release in chewing gum by modifying the solubility or dissolution rate of neotame. Any standard technique which gives partial or full encapsulation of the neotame sweetener can be used. These techniques include, but are not limited to, spray drying, spray chilling, fluid-bed coating and coacervation. These encapsulation techniques that give partial encapsulation or full encapsulation can be used individually or in any combination in a single step process or multiple step process. Generally, delayed release of sweetener is obtained in multistep processes like spray drying the sweetener and then fluid-bed coating of the resultant powder.

The encapsulation techniques here described are standard coating techniques and generally give varying degrees of coating, from partial to full coating, depending on the coating composition used in the process. Also, the coating compositions may be susceptible to water permeation to various degrees. Generally, compositions that have high organic solubility, good film-forming properties and low water solubility give better delayed release of the sweetener. Such compositions include acrylic polymers and copolymers, carboxyvinyl polymer, polyamides, polystyrene, polyvinyl acetate, polyvinyl acetate phthalate, polyvinylpyrrolidone, and waxes. Although all of these materials are possible for encapsulation of neotame sweetener, only food-grade materials should be considered. Two standard food-grade coating materials that are good film formers but not water soluble are shellac and Zein. Others which are more water soluble, but good film formers, are materials like agar, alginates, a wide range of cellulose derivatives like ethyl cellulose, methyl cellulose, sodium hydroxymethyl cellulose, and hydroxypropylmethyl cellulose, dextrin, gelatin, and modified starches. These ingredients, which are generally approved for food use, give a fast release when used as an encapsulant for neotame. Other encapsulants like acacia or maltodextrin can also encapsulate neotame, and give a fast release of neotame in gum.

The amount of coating or encapsulating material on the sweetener neotame also controls the length of time for its release from chewing gum. Generally, the higher the level of water-insoluble coating and the lower the amount of active neotame, the slower the release of the sweetener during mastication. Also, the higher the usage level of a water-soluble coating, the slower the release rate. The release may be instantaneous, or gradual over an extended period of time. To obtain the desired sweetness release to blend with a gum's flavor release, the encapsulant should be a minimum of 10% of the coated sweetener. Preferably, the encapsulant should be a minimum of 20% to 50% of the coated sweetener. Depending on the coating material, a higher or lower amount of coating material may be needed to give the desired release of sweetener to balance sweetness release with flavor release.

Another method of giving a modified release of the sweetener, neotame, is agglomeration of the sweetener with an agglomerating agent which partially coats the sweetener. This method includes the step of mixing the sweetener and agglomerating agent with a small amount of water or solvent. The mixture is prepared in such a way as to have individual wet particles in contact with each other so that a partial coating can be applied. After the water or solvent is removed, the mixture is ground and used as a powdered, coated sweetener.

Materials that can be used as the agglomerating agent are the same as those used in encapsulation procedures mentioned previously. However, since the coating is only a partial encapsulation, and the neotame sweetener is slightly water-soluble, some agglomerating agents are more effective in modifying the sweetener release than others. Some of the better agglomerating agents are the organic polymers like acrylic polymers and copolymers, polyvinyl acetate, polyvinylpyrrolidone, waxes, shellac, and Zein. Other agglomerating agents are not as effective in giving the sweetener a delayed release as are the polymers, waxes, shellac and Zein, but may actually give a faster release. Other agglomerating agents include, but are not limited to, agar, alginates, a wide range of cellulose derivatives like ethyl cellulose, methyl cellulose, sodium hydroxymethyl cellulose, hydroxypropylmethyl cellulose, dextrin, gelatin, modified starches, and vegetable gums like guar gum, locust bean gum, and carrageenin. Even though the agglomerated sweetener is only partially coated, when the quantity of coating is increased compared to the quantity of neotame sweetener, the release of the sweetener can be delayed for a longer time during mastication. The level of coating used in the agglomerated product is a minimum of about 5%. Preferably the coating level is a minimum of about 15% and more preferably about 20%. Depending on the agglomerating agent, a higher or lower amount of agent may be needed to give the desired release of sweetener to balance sweetness release with flavor release.

The neotame sweetener may be coated in a two-step process or multiple step process. The sweetener may be encapsulated with any of the materials as described previously and then the encapsulated sweetener can be agglomerated as described previously to obtain an encapsulated/agglomerated/sweetener product that could be used in chewing gum to give a delayed release of sweetener.

Notame sweetener may be absorbed onto another component which is porous and become entrapped in the matrix of the porous component. Common materials used for absorbing the sweetener include, but are not limited to, silicas, silicates, pharmasorb clay, spongelike beads or microbeads, amorphous sugars like spray-dried dextrose, sucrose, alditols, amorphous carbonates and hydroxides, including aluminum and calcium lakes, vegetable gums and other spray dried materials. Insoluble materials will give neotame sweetener a delayed release, while water-soluble materials will give neotame a fast release from chewing gum.

Depending on the type of absorbent material and how it is prepared, the amount of neotame sweetener that can be loaded onto the absorbent will vary. Generally materials like polymers or spongelike beads or microbeads, amorphous sugars and alditols and amorphous carbonates and hydroxides absorb an amount equal to 10% to 40% of the weight of the absorbent. Other materials like silicas and pharmasorb clays may be able to absorb 20% to 80% of the weight of the absorbent.

The general procedure for absorbing the sweetener onto the absorbent is as follows. An absorbent like fumed silica powder can be mixed in a powder blender and an aqueous solution of the neotame sweetener can be sprayed onto the powder as mixing continues. The aqueous solution can be about 0.1% neotame solids, and higher solid levels may be used if temperatures up to 90°C are used. Generally water is the solvent, but other solvents like alcohol could also be used if approved for use in food. As the powder mixes, the liquid is sprayed onto the powder. Spraying is stopped before the mix becomes damp. The still free-flowing powder is removed from the mixer and dried to remove the water or other solvent, and then ground to a specific particle size.

After the neotame sweetener is absorbed onto an absorbent or fixed onto an absorbent, the fixative/sweetener can be coated by encapsulation. Either full or partial encapsulation may be used, depending on the coating composition used in the process. Full encapsulation may be obtained by coating with a polymer as in spray drying, spray chilling, fluid-bed coating, coacervation, or any other standard technique. A partial encapsulation or coating can be obtained by agglomeration of the fixative/sweetener mixture using any of the materials discussed above.

The previously described agglomerated high-potency sweetener may readily be incorporated into a chewing gum composition. The remainder of the chewing gum ingredients are noncritical to the present invention. That is, the coated particles of high-potency sweetener can be incorporated into conventional chewing gum formulations in a conventional manner. Naturally, the preferred chewing gum formulation is a sugarless chewing gum. However, the high-potency sweeteners may also be used in a sugar chewing gum to intensify and/or extend the sweetness thereof. The coated high-potency sweetener may be used in either regular chewing gum or bubble gum.

In general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, resins, fats and oils, waxes, softeners and inorganic fillers. Elastomers may include polyisobutylene, isobutylene-isoprene copolymer and styrene butadiene rubber, as well as natural latexes such as chicle. Resins include polyvinylacetate and terpene resins. Fats and oils may also be included in the gum base, including tallow, hydrogenated and partially hydrogenated vegetable oils, and cocoa butter. Commonly employed waxes include paraffin, microcrystalline and natural waxes such as beeswax and carnauba. According to the preferred embodiment of the present invention, the insoluble gum base constitutes between 5 to 95 percent by weight of the gum. More preferably the insoluble gum base comprises between 10 and 50 percent by weight of the gum and most preferably 20 to 35 percent by weight of the gum.

The gum base typically also includes a filler component. The filler component may be calcium carbonate, magnesium carbonate, talc, dicalcium phosphate or the like. The filler may constitute between 5 and 60 percent by weight of the gum base. Preferably, the filler comprises 5 to 50 percent by weight of the gum base.

Gum bases typically also contain softeners, including glycerol monostearate and glycerol triacetate. Further, gum bases may also contain optional ingredients such as antioxidants, colors, and emulsifiers. The present invention contemplates employing any commercially acceptable gum base.

The water-soluble portion of the chewing gum may further comprise softeners, sweeteners, flavoring agents and combinations thereof. Softeners are added to the chewing gum in order to optimize the chewability and mouth feel of the gum. Softeners, also known in the art as plasticizers or plasticizing agents, generally constitute between 0.5 to 15.0 percent by weight of the chewing gum. Softeners contemplated by the present invention include glycerin, lecithin, and combinations thereof. Further, aqueous sweetener solutions such as those containing sorbitol, hydrogenated starch hydrolysates, corn syrup and combinations thereof may be used as softeners and binding agents in gum.

As mentioned above, the coated high-potency sweeteners of the present invention will most likely be used in sugarless gum formulations. However, formulations containing sugar are also within the scope of the invention. Sugar sweeteners generally include saccharide-containing components commonly known in the chewing gum art which comprise, but are not limited to, sucrose, dextrose, maltose, dextrin, dried invert sugar, fructose, galactose, corn syrup solids and the like, alone or in any combination.

The coated high-potency sweeteners of the present invention can also be used in combination with other sugarless sweeteners. Generally sugarless sweeteners include components with sweetening characteristics but which are devoid of the commonly known sugars and comprise, but are not limited to, sugar alcohols such as sorbitol, mannitol, xylitol, hydrogenated starch hydrolysates, maltitol, lactitol, erythritol and the like, alone or in any combination.

Depending on the particular sweetness release profile and shelf-stability needed, the coated high-potency sweeteners of the present invention can also be used in combination with uncoated high-potency sweeteners or with high-potency sweeteners coated with other materials and by other techniques.

A flavoring agent may be present in the chewing gum in an amount within the range of from 0.1 to 10.0 weight percent and preferably from 0.5 to 3.0 weight percent of the gum. The flavoring agents may comprise essential oils, synthetic flavors, or mixture thereof including, but not limited to, oils derived from plants and fruits such as citrus oils, fruit essences, peppermint oil, spearmint oil, clove oil, oil of wintergreen, anise, and the like. Artificial flavoring components are also contemplated for use in gums of the present invention. Those skilled in the art will recognize that natural and artificial flavoring agents may be combined in any sensorally acceptable blend. All such flavors and flavor blends are contemplated by the present invention.

Optional ingredients such as colors, emulsifiers and pharmaceutical agents may be added to the chewing gum.

In general, chewing gum is manufactured by sequentially adding the various chewing gum ingredients to a commercially available mixer known in the art. After the ingredients have been thoroughly mixed, the gum mass is discharged from the mixer and shaped into the desired form such as by rolling into sheets and cutting into sticks, extruding into chunks or casting into pellets.

Generally, the ingredients are mixed by first melting the gum base and adding it to the running mixer. The base may also be melted in the mixer itself. Color or emulsifiers may also be added at this time. A softener such as glycerin may also be added at this time, along with syrup and a portion of the bulking agent. Further portions of the bulking agent may then be added to the mixer. A flavoring agent is typically added with the final portion of the bulking agent. The coated sweetener of the present invention is preferably added after the final portion of bulking agent and flavor have been added.

The entire mixing procedure typically takes from five to fifteen minutes, but longer mixing times may sometimes be required. Those skilled in the art will recognize that many variations of the above described procedure may be followed.

### EXAMPLES

The following examples of the invention and comparative examples are provided by way of explanation and illustration.

The formulas listed in Table 1 comprise various sugar-free formulas in which neotame can be added to gum after it is dissolved in various aqueous type solvents.

**TABLE 1**

| (Wt. %) | | | | | |
|---|---|---|---|---|---|
| | Ex. 1 | Ex. 2 | Ex.3 | Ex.4 | Ex. 5 |
| Sorbitol | 49.8 | 49.6 | 49.3 | 49.3 | 49.3 |
| Manitol | 8.0 | 8.0 | 8.0 | 8.0 | 8.0 |
| Gum Base | 25.5 | 25.5 | 25.5 | 25.5 | 25.5 |
| Glycerin | 8.2 | 7.4 | 4.7 | 4.7 | 7.5 |
| Hydrogenated Starch | | | | | |
| Hydrolysates | 6.8 | 6.8 | 6.8 | 6.8 | 4.0 |
| Lecithin | 0.2 | 0.2 | 0.2 | 0.2 | 0.2 |
| Peppermint Flavor | 1.44 | 1.45 | 1.45 | 1.45 | 1.45 |
| Color | 0.05 | 0.05 | 0.05 | 0.05 | 0.05 |
| Liquid/ neotame blend | 0.01 | 1.0 | 4.0 | 4.0 | 4.0 |

Example 1-neotame powder can be added directly to the gum.

Example 2-A 0.5 g portion of neotame can be dispersed in 50.0 g water, making a 1.0% solution, and added to gum.

Example 3-A 0.25 gram portion of neotame can be dispersed in 100 grams of propylene glycol, making a 0.25% solution, and added to gum.

Example 4-A 0.25 gram portion of neotame can be dispersed in 100 grams of glycerin, making a 0.25% solution, and added to gum.

Example 5-A 0.25 gram portion of neotame can be dispersed in hot hydrogenated starch hydrolysates, making a 0.25% solution, and added to gum.

In the next examples of a sugar gum formulation, neotame can be dispersed in water and emulsifiers can be added to the aqueous solution. Example solutions can be prepared by dispersing 0.75 grams of neotame in 85 grams water and adding 15 grams of emulsifiers of various hydrophilic-lipophilic balance (HLB) values to the solution The mixtures can then be used in the following formulas.

**TABLE 2**

| (Wt. %) | | | | | | |
|---|---|---|---|---|---|---|
| | Ex.6 | Ex.7 | Ex.8 | Ex.9 | Ex.10 | Ex. 11 |
| Sugar | 55.2 | 55.2 | 55.2 | 55.2 | 55.2 | 55.2 |
| Base | 19.2 | 19.2 | 19.2 | 19.2 | 19.2 | 19.2 |
| Corn Syrup | 12.9 | 12.9 | 12.9 | 12.9 | 12.9 | 12.9 |
| Glycerine | 0.9 | 0.9 | 0.9 | 0.9 | 0.9 | 0.9 |
| Dextrose Mono-hydrate | 9.9 | 9.9 | 9.9 | 9.9 | 9.9 | 9.9 |
| Peppermint Flavor | 0.9 | 0.9 | 0.9 | 0.9 | 0.9 | 0.9 |
| Sweetener/ Emulsifier/ Water Mixture | 1.0 | 1.0 | 1.0 | 1.0 | 1.0 | 1.0 |
| Emulsifier | None | HLB=2 | HLB=4 | HLB=6 | HLB=9 | HLB=12 |

Examples 12-16-The same as the formulations made in Examples 6-11, respectively, except that the flavor can be mixed together with the aqueous sweetener solution and emulsified before adding the mixture to the gum batch.

Neotame sweetener can also be blended into various base ingredients. A typical base formula is as follows:

| | Wt. % |
|---|---|
| Polyvinyl acetate | 27 |
| Synthetic rubber | 13 |
| Paraffin wax | 13 |
| Fat | 3 |
| Glycerol Monostearate | 5 |
| Terpene Resin | 27 |
| Calcium Carbonate Filler | 12 |
| | 100% |

The individual base components can be softened prior to their addition in the base manufacturing process. To the presoftened base component, neotame can be added and mixed, and then the presoftened base/sweetener blend can be added to make the finished base. In the following examples, neotame can be mixed first with one of the base ingredients, and the mixed ingredient can then be used in making a base. The ingredients blended with neotame can then be used at the levels indicated in the typical base formula above.

Example 17-The terpene resin used to make the base is 99.8% polyterpene resin and 0.2% neotame.

Example 18-The polyvinyl acetate used to make the base is 99.8% low M.W. polyvinyl acetate and 0.2% neotame.

Example 19-The paraffin wax used to make the base is 99.6% paraffin wax and 0.4% neotame.

Neotame may also be added to an otherwise complete gum base.

Example 20-0.05% neotame can be mixed with 99.95% of a gum base having the above listed typical formula. The neotame can be added near the end of the process after all the other ingredients are added.

The samples of finished base made with neotame added to different base components can then be evaluated in a sugar-type chewing gum formulated as follows:

**TABLE 3**

| (For examples 17, 18, 19 and 20) | |
|---|---|
| | (Wt. %) |
| Sugar | 55.2 |
| Base | 19.2 |
| Corn Syrup | 13.4 |
| Glycerine | 1.4 |
| Dextrose Monohydrate | 9.9 |
| Peppermint Flavor | 0.9 |
| | 100% |

The theoretical level of neotame sweetener is 0.01 % in the finished gum.

Using the following formulation of a sugar-free gum, a variety of encapsulated neotame samples can be evaluated:

**TABLE 4**

| (Wt.%) | |
|---|---|
| Sorbitol | 49.5 |
| Manitol | 8.0 |
| Gum Base | 25.5 |
| Glycerin | 8.5 |
| Lycasin | 6.8 |
| Lecithin | 0.2 |
| Peppermint Flavor | 1.44 |
| Color | 0.05 |
| Active Neotame | 0.01 |

For spray drying, the solids level of an aqueous or alcoholic solution can be about 10-50%, but preferred levels are indicated in the examples listed.

Neotame could also be used in gum as an agglomerated sweetener to give delayed sweetness release. Agglomerated sweeteners can be prepared as in the following examples

Example 22-A 15% hydroxypropylmethyl cellulose (HPMC), 85% active neotame powder mixture is prepared by agglomerating neotame and HPMC blended together, with water being added, and the resulting product being dried and ground.

Example 23-A 15% gelatin, 85% active neotame powder mixture is made by agglomerating neotame and gelatin blended together, with water being added, and the resulting product being dried and ground.

Example 24-A 10% Zein, 90% active neotame powder mixture is made by agglomerating neotame with an alcohol solution containing 25% Zein, and drying and grinding the resulting product. Example 25-A 15% shellac, 85% active neotame powder mixture is made by agglomerating neotame with an alcohol solution containing 25% shellac, and drying and grinding the resulting product.

Example 26-A 20% HPMC, 80% active neotame powder mixture is obtained by agglomerating an HPMC and neotame mixture blended together, with water being added, and the resulting product being dried and ground.

Example 27-A 20% Zein, 80% active neotamepowder mixture is obtained by agglomerating neotame and Zein dissolved in high-pH water (11.6-12.0) at 15% solids, with the resulting product being dried and ground.

Example 28-A 20% wax, 80% active neotame powder mixture is obtained by agglomerating neotame and molten wax, and cooling and grinding the resulting product.

Example 29-A 15% maltodextrin, 85% active neotame powder mixture is obtained by agglomerating a blend of neotame and maltodextrin, then adding water, drying and grinding.

All of the above mixtures can be added to any of the following types of chewing gum formulas:

**TABLE 5**

| (Wt. %) | | | | | |
|---|---|---|---|---|---|
| | Sugar | Sugar With Sorbitol | Sugarless With Water | Sugarless With Lycasin | Sugarless No Water |
| Gum Base | 19.2 | 19.2 | 25.5 | 25.5 | 25.5 |
| Sugar | 55.495 | 53.495 | -- | - | - |
| Sorbitol | - | 2.0 | 53.79 | 49.49 | 52.29 |
| Mannitol | - | - | 8.0 | 8.0 | 12.0 |
| Corn Syrup | 13.1 | 13.1 | - | - | - |
| Lycasin/ Sorbitol Liquid | - | - | 9,5^{(a)} | 6.8^{(b)} | - |
| Glycerin | 1.4 | 1.4 | 1.5 | 8.5 | 8.5 |
| Lecithin | - | - | 0.2 | 0.2 | 0.2 |
| Dextrose Mono-hydrate | 9.9 | 9.9 | - | -- | - |
| Flavor | 0.9 | 0.9 | 1.5 | 1.5 | 1.5 |
| Level of Active Neotame | 0.005 | 0.005 | 0.01 | 0.01 | 0.01 |

| | | | | | |
|---|---|---|---|---|---|
| ^{(a)}liquid sorbitol (70% sorbitol, 30% water) ^{(b)}Lycasin brand hydrogenated starch hydrolysate syrup from Roquette | | | | | |

If each of the examples of agglomerated material (22-29) were evaluated in the formulations shown in Table 5, all samples except Example 29 with maltodextrin would give neotame a delayed release. Samples using Zein, wax, and shellac would give the slowest release rate. Maltodextrin would give a fast release.

Partially coated or fully coated neotame can also be used in sugar type gum formulations containing other sugars, such as in the following formulations A-G:

**TABLE 6**

| (Wt. %) | | | | | | | |
|---|---|---|---|---|---|---|---|
| | A | B | C | D | E | F | G |
| Gum Base | 19.2 | 19.2 | 19.2 | 19.2 | 19.2 | 19.2 | 19.2 |
| Sugar | 59.49 | 50.49 | 49.49 | 49.49 | 50.49 | 52.49 | 52.49 |
| Glycerin | 1.4 | 1.4 | 1.4 | 1.4 | 1.4 | 1.4 | 1.4 |
| Corn Syrup | 19.0 | 23.0 | 19.0 | 19.0 | 23.0 | 16.0 | 16.0 |
| Dextrose | -- | -- | 5.0 | -- | -- | -- | -- |
| Lactose | -- | -- | -- | -- | 5.0 | -- | -- |
| Fructose | -- | -- | 5.0 | -- | -- | -- | -- |
| Invert Sugar | -- | -- | -- | 10.0 -- | | -- | -- |
| Maltose | -- | -- | -- | -- | -- | 10.0 | -- |
| Palatinose | -- | -- | -- | -- | -- | -- | 10.0 |
| Corn Syrup Solids | -- | 5.0 | -- | -- | -- | -- | -- |
| Peppermint Flavor | 0.9 | 0.9 | 0.9 | 0.9 | 0.9 | 0.9 | 0.9 |
| Level of Active Neotame | 0.01 | 0.01 | 0.01 | 0.01 | 0.01 | 0.01 | 0.01 |

These formulations may also contain sugar alcohols such as sorbitol, mannitol, xylitol, lactitol, maltitol, hydrogenated isomaltulose, and Lycasin or combinations thereof. Sugarless type gum formulations with partially coated or fully coated neotame can also be made using various sugar alcohols, such as the following formulations H-P:

**TABLE 7**

| (Wt. %) | | | | | | | | | |
|---|---|---|---|---|---|---|---|---|---|
| | H | I | J | K | L | M | N | O | P |
| Base | 25.5 | 25.5 | 25.5 | 25.5 | 25.5 | 25.5 | 25.5 | 25.5 | 25.5 |
| Sorbitol | 53.99 | 46.99 | 41.99 | 41.99 | 41.99 | 41.995 | 36.995 | 37.995 | 46.995 |
| Sorbitol Liquid/ Lycasin | 17.0 | 14.0 | 6.0 | - | 5.0 | - | - | 60^{(a)} | 18.0^{(a)} |
| Mannitol | - | 10.0 | 8.0 | 8.0 | 8.0 | 8.0 | 8.0 | 8.0 | 8.0 |
| Maltitol | - | - | - | 5.0 | - | - | 5.0 | - | - |
| Xylitol | - | - | 15.0 | 10.0 | - | - | 5.0 | 15.0 | - |
| Lactitol | - | - | - | - | 10.0 | - | - | - | - |
| Hydrogenated Isomaltulose | - | - | - | - | - | 15.0 | 10.0 | - | - |
| Glycerin | 2.0 | 2.0 | 2.0 | 8.0 | 8.0 | 8.0 | 8.0 | 6.0 | -- |
| Flavor | 1.5 | 1.5 | 1.5 | 1.5 | 1.5 | 1.5 | 1.5 | 1.5 | 1.5 |
| Level of Active Neotame | 0.01 | 0.01 | 0.01 | 0.01 | 0.01 | 0.005 | 0.005 | 0.005 | 0.005 |

| | | | | | | | | | |
|---|---|---|---|---|---|---|---|---|---|
| ^{(a)}Lycasin, all others use sorbitol liquid | | | | | | | | | |

All of these formulations in Table 6 and Table 7 which use the agglomerated neotame as described in the examples (22-29) would be expected to give a modified release of sweetness.

Multiple step agglomeration procedures can also be used in making release-modified sweeteners for use in the formulations in Tables 5, 6 and 7. Examples of multiple step treatments are here described: Example 30-Neotame is spray dried with maltodextrin at 10% solid to prepare a powder This powder is then agglomerated with a hydroxypropylmethyl cellulose (HPMC) in a ratio of 85/15 powder/HPMC, wetted with water and dried. After grinding the resulting powder will contain about 68% active neotame, 17% maltodextrin and 15% HPMC.

Example 31-Neotame is agglomerated with HPMC in a ratio of 85/15 sweetener/HPMC. After drying and grinding, the resulting powder is fluid-bed coated with an alcohol/shellac solution at about 20% solids to give a final product containing about 60% active neotame, 10% HPMC, and about 30% shellac.

Example 32-Neotame is agglomerated with HPMC in a ratio of 85/15 sweetener/HPMC. After drying and grinding, the resulting powder is agglomerated with a 15% solids, high-pH, aqueous solution of Zein to give a final product containing about 60% active neotame, 10% HPMC, and 30% Zein.

Example 33-Neotame is spray dried with a 20% solution of gelatin. The spray dried product is then agglomerated with a 15% solids, high-pH, aqueous solution of Zein. The final product will contain about 50% active neotame, 20% gelatin, and 30% Zein.

Example 34-Neotame is agglomerated with molten wax in a ratio of 85/15 sweetener/wax. When the mixture cools and is ground, it is fluid-bed coated with a 20% Zein-80% alcohol solution, giving a final product containing 60% active neotame, 10% wax and 30% Zein.

These examples 30-34, when used in any of the formulations noted in Tables 5, 6, and 7 above, give neotame a modified release of sweetness. These multiple step procedures can actually give more delayed release then the single step processes. Multiple step processes of more than two steps may give even longer delayed release times, but may generally become less cost effective and less efficient. Preferably spray drying can be the first step, with additional steps of fluid-bed coating, spray chilling and agglomeration being part of the latter steps.

Many of the examples listed are single step processes. However, more delayed release of the neotame sweetener may be obtained by combining the various processes of encapsulation, agglomeration, absorption, and entrapment.

The neotame sweetener may also be used with a variety of other high-intensity sweeteners and blended together before encapsulation, agglomeration; absorption, and entrapment. Some examples are:

Example 35-Neotame and thaumatin in a 1/1 ratio are dispersed in water with a 10% solution of gelatin and spray dried. This spray dried powder is then agglomerated with a high-pH aqueous 15% Zein solution. The mixture is dried and ground and gives a product containing 25% neotame, 25% thaumatin, 35% gelatin, and 15% Zein.

Example 36-Neotame and sodium cyclamate in a 1/3 ratio are blended together as a powder and then agglomerated with water and hydroxypropylmethyl cellulose (HPMC). This blend is dried, ground and agglomerated further with a high-pH, aqueous 15% solution of Zein to obtain a product containing 51% sodium cyclamate, 17% neotame, 12% HPMC and 20% Zein.

Example 37-Sucralose and neotame in a 5/1 ratio are blended together as a powder and fluid-bed coated with a solution of 25% shellac in alcohol. The coated product is agglomerated further with water and hydroxypropylmethyl cellulose (HPMC) to obtain a product containing 50% sucralose, 10% neotame, 25% shellac, and 15% HPMC.

Example 38-Neotame and sodium saccharin in a ratio of 5/1 are blended together as a powder and fluid bed coated with a solution of 25% shellac in alcohol. The coated product is agglomerated further with water and hydroxypropylmethyl cellulose (HPMC) to obtain a product containing 10% neotame, 50% sodium saccharin, 25% shellac, and 15% HPMC.

If the blends of neotame and other high-intensity sweeteners of Examples 35-38 are tested in gum formulations such as those noted in Tables 4, 5, 6 and 7, a delayed release of the sweetener and sweetness should be expected. Due to the synergistic effects of some of the sweetener combinations in Examples 35-38, less total sweetener can be used to give the same sweetness level as the single delayed release neotame sweetener.

## Claims

1. A method of producing a chewing gum containing a physically-modified N-substituted derivative of aspartame in order to control the release rate of the N-substituted derivative of aspartame comprising the steps of:
a) mixing a quantity of the N-substituted derivative of aspartame with an agglomerating agent and a solvent to partially coat the N-substituted derivative of aspartame;
b) removing the solvent from the mixture of N-substituted derivative of aspartame and agglomerating agent to form a dried material; and
c) adding a quantity of the dried material to a chewing gum formulation to provide an N-substituted derivative of aspartame level in gum of from 0.0001% to 0.1%.

2. The method of Claim 1 wherein the level of coating on the agglomerated N-substituted derivative of aspartame is at least 5%.

3. The method of Claim 1 wherein the level of coating on the agglomerated N-substituted derivative of aspartame is at least 15%.

4. The method of Claim 1 wherein the N-substituted derivative of aspartame is selected from the group consisting of:
a) N-[N-(3,3-dimethylbutyl)-L-α-aspartyl]-L-phenylalanine 1-methyl ester;
b) N-[N-[3-(4-hydroxy-3-menthoxyphenyl)propyl]-L-α-aspartyl]-L-phenylalanine 1-methyl ester; and
c) N-[N-(3-phenylpropyl)-L-α-aspartyl]-L-phenylalanine 1-methyl ester.

5. The method of Claim 1 wherein the dried material is ground to a powder prior to adding the dried material to the chewing gum.

6. The method of any one of the preceding claims wherein the N-substituted derivative of aspartame comprises N-[N-(3,3-dimethylbutyl)-L-α-aspartyl]-L-phenylalanine 1-methyl ester.

## Patentansprüche

1. Verfahren zur Herstellung von Kaugummi, welcher ein physikalisch modifiziertes N-substituiertes Aspartam-Derivat enthält, um die Freisetzungsrate des N-substituierten Aspartam-Derivats zu steuern, wobei das Verfahren die folgenden Schritte aufweist:
a) Mischen einer Menge des N-substituierten Aspartam-Derivats mit einem Agglomerationsmittel und einem Lösemittel zur teilweisen Beschichtung des N-substituierten Aspartam-Derivats;
b) Entfernen des Lösemittels aus dem Gemisch aus N-substituiertem Aspartam-Derivat und Agglomerationsmittel zur Bildung eines getrockneten Materials; und
c) Hinzufügen einer Menge des getrockneten Materials zu einer Kaugummi-Rezeptur zur Bereitstellung eines Gehalts an N-substituiertem Aspartam-Derivat im Kaugummi von 0,0001 % bis 0,1 %.

2. Verfahren nach Anspruch 1, **dadurch gekennzeichnet, dass** der Gehalt an Beschichtung auf dem agglomerierten N-substituierten Aspartam-Derivat mindestens 5% beträgt.

3. Verfahren nach Anspruch 1, **dadurch gekennzeichnet, dass** der Gehalt an Beschichtung auf dem agglomerierten N-substituierten Aspartam-Derivat mindestens 15% beträgt.

4. Verfahren nach Anspruch 1, **dadurch gekennzeichnet, dass** das N-substituierte Aspartam-Derivat aus der nachfolgenden Gruppe ausgewählt wird, welche besteht aus:
a) N-[N-(3,3-Dimethylbutyl)-L-α-aspartyl]-L-phenylalanin-1-methylester;
b) N-[N-[3-(4-Hydroxy-3-Menthoxyphenyl)propyl]-L-α-aspartyl]-L-phenylalanin-1-methylester; und
c) N-[N-(3-Phenylpropyl)-L-α-aspartyl]-L-phenylalanin-1-methylester.

5. Verfahren nach Anspruch 1, **dadurch gekennzeichnet, dass** das getrocknete Material zu Pulver gemahlen wird, bevor das getrocknete Material dem Kaugummi beigemengt wird.

6. Verfahren nach einem der vorhergehenden Ansprüche, **dadurch gekennzeichnet, dass** das N-substituierte Aspartam-Derivat
N-[N-(3,3-Dimethylbutyl)-L-α-aspartyl]-L-phenylalanin-1-methylester aufweist.

## Revendications

1. Procédé de production d'une gomme à mâcher contenant un dérivé N-substitué physiquement modifié d'aspartame pour contrôler la vitesse de libération du dérivé N-substitué de l'aspartame, comprenant les étapes de:
a) mélanger une quantité du dérivé N-substitué d'aspartame avec un agent d'agglomération et un solvant pour revêtir partiellement le dérivé N-substitué de l'aspartame;
b) retirer le solvant du mélange du dérivé N-substitué d'aspartame et l'agent d'agglomération pour former un matériau séché; et
c) ajouter une quantité du matériau séché à une formulation de gomme à mâcher pour réaliser un dérivé N-substitué de niveau d'aspartame dans la gomme de 0,0001% à 0,1%.

2. Procédé selon la revendication 1, dans lequel le niveau de revêtement sur le dérivé aggloméré N-substitué d'aspartame est au moins de 5%.

3. Procédé selon la revendication 1, dans lequel le niveau de revêtement sur le dérivé aggloméré N-substitué d'aspartame est au moins de 15%.

4. Procédé selon la revendication 1, dans lequel le dérivé N-substitué d'aspartame est sélectionné dans le groupe consistant en:
a) N-[N-(3,3-diméthylbutyl)-L-α-aspartyl]-L-phénylalanine 1-méthyl ester,
b) N-[N-[3-(4-hydroxy-3-méthoxyphényl)propyl]-L-α-aspartyl]-L-phénylalanine 1-méthyl ester; et
c) N-[N-(3-phénylpropyl)-L-α-aspartyl]-L-phénylalanine 1-méthyl ester.

5. Procédé selon la revendication 1, dans lequel le matériau séché est moulu en une poudre avant d'ajouter le matériau séché à la gomme à mâcher.

6. Procédé selon l'une quelconque des revendications précédentes, dans lequel le dérivé N-substitué d'aspartame comprend N-[N-(3,3-diméthylbutyl)-L-α-aspartyl]-L-phénylalanine 1-méthyl ester.
